# EUROPEAN PATENT SPECIFICATION

(11) **EP 0 445 490 B1**
(45) Date of publication and mention of the grant of the patent: **07.06.1995**
(21) Application number: 90830089.0
(22) Date of filing: 08.03.1990
(51) Int. Cl.: H02G 15/068, H01B 17/32

(54) **Ribbon for the lagging of terminations for medium voltage cables and of smooth insulations**
Band für die Umhüllung von Endverschlüssen von Mittelspannungskabeln und von glatten Isolierungen
Ruban pour le revêtement de terminaisons de câbles à moyenne tension et d'isolations lisses

(43) Date of publication of application: 11.09.1991
(73) Proprietor: ITALCO S.P.A., Offida (Ascoli Piceno) (IT)
(72) Inventor: Grandi, Sergio, Villasanta (Milano) (IT)
(74) Representative: Mercurio, Franco

(56) References cited:
- CH-A- 640 666
- CH-A- 659 907

## Description

The present invention relates to a ribbon for the lagging of terminations for medium voltage cables and of smooth insulators.

It is frequently used the so called "ribboned" technology applied to the terminations, in which the characteristic insulating functions, electrical field control and sealing are essentially carried out by ribbons of various and suitable nature, suitably wrapped and set on the end of the cable.

The advantage of this type of solution, more appreciated, consists in the great flexibility of use intended as possibility of use for a very high range of sections, of diameters and of cable tensions.

Such cables usually consist of a conductor coated by a primary insulating material bearing a semi-conductive screen and protected by a metal screen and by an external sheath.

All these parts are mounted concentrically among them.

The cable termination is completed by an upper sealing and a lower sealing obtained by the wrapping up of ribbons in correspondence with zones coated by an insulating seal. The whole is covered by plane ribbons wrapped for the above cited insulating, electric field control and sealing functions. At the conductor free end, opposite to that of the metal screen, usually a cable terminal is applied.

Presently such known ribbons are plane having a rectangular section, of thin thickness, showing the inconvenience of not being able to obtain escape lines, that is lenghts of surface insulation between live part and zero potential part, sufficiently high, as it is on the contrary required for many applications. This cames from the fact that the external insulation surface obtained by the wrapping up of such known ribbons cannot result but cylindrical-cigar-shaped and thus of a longitudinal development is a little superior to its length in an axial direction. Such inconvenience prevents from using these ribboned terminals in the outdoor applications and set up a limitation also to the use of the indoor applications, specially where exists a presence of dust, a high degree of humidity and a possibility of condensation.

Another direct consequence of the above is the higher lenght of such ribboned terminations, under the same conditions, with respect to the other alternative solutions and this aspect may become important whereas there are limited spaces available, for exemple for installations in cells or medium-voltage compartments.

Similar problems, as far as the escape line is concerned, also exist for the smooth insulators generally, cylindrically shaped in particular, usually also called insulating sticks.

Other types of ribbons as disclosed in the known patents CH-A-640666, CH-A-659907 and FR-A-2363170 are provided with a tongue profile protruding outside with a helical structure and composed of an elastomeric material, wherein the ribbon is wrapped every time around the cable.

Scope of the present invention is that of improving the charachteristics of such ribbons for the cables terminations and smooth insulators providing a ribbon formed as disclosed in the description and claims, here enclosed.

Further characteristics and advantages of the invention will result evident from the following detailed specification of a preferred form for a purely exemplifying purpose and not limitating in the enclosed figures where:
FIGURE 1 represents a partially sectioned termination view, and
FIGURE 2 represents a fragment of the helical ribbon preformed in an enlarged scale.

With reference to the figures, the termination 1 consists of the cable 2 end on which an insulating 3 ribbon is wrapped up having an helical configuration, that, according to the present invention, in cross section has a tongue 4 shaped profile at the outside.

Said cable 2 end consists to its turn of the terminal part of a conductor 5 coated by a primary 6 insulation bearing a semi-conductive 7 screen and protected by a metal 9 screen and by an external 8 sheath.

The above mentioned parts are mounted concentrically among them.

Further the cable terminations completed by an upper 10 sealing and a lower 11 sealing obtained by the wrapping of ribbons in correspondance of zones 12 and 13 covered by an insulating putty.

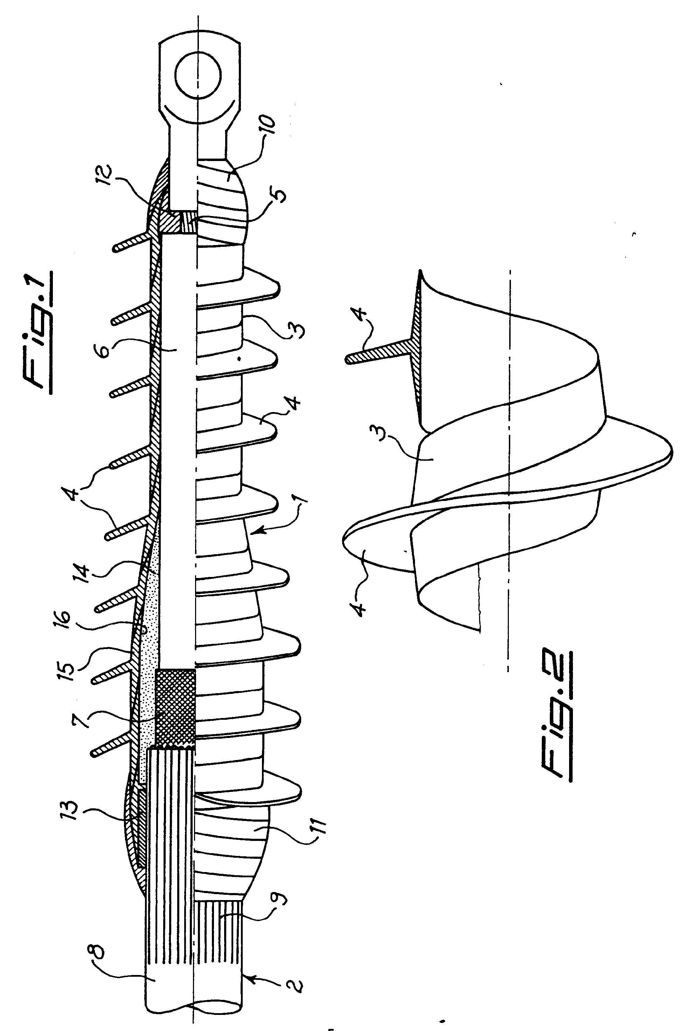

As one can see in Figure 1, in correspondence to the semi-conductive 7 screen a ribbon 14 is wrapped up for the electric field control in proximity of the semiconductive 7 screen interruption.

In this instance the ribbon 3 with tongue profile is formed by two coupled parts, of which the external 15 one, on the tongue side, is of a material carrying outthe insulating function while the internal 16 one is of a material performing the sealing adhesive function that is in direct contact with the ribbon 14 below.

According to a further solution, this last ribbon 14 may be eliminated, in the case where the ribbon 3 is formed by two coupled parts, of which, the external 15 one is always of a material carrying out the insulating function, while the internal 16 one in contact directly with the cable 2 end is of a material carrying out the control of the electric field function in proximity of the the conductive 7 screen interruption.

Finally the ribbon 3 wrapped on the cable 2 end may be advantageously made of a sole elastomeric material having the following characteristics:
- high dielectric constant : ε between 5 and 15
- high volumetric resistivity : 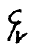 ≧10⁹Ω. m
- low loss angle : tgδ≦0,1.

Such material so formed is able to carry out at the same time the insulating function of the electric field control obtaining the rarefaction of the equipotential in the electric field that creates in correspondance to the interruption of the semi-conductive 7 screen.

As one can see in Figure 2, the ribbon 3 can be produced with the helical configuration preformed so as to make easier and quick its application to the cable end or on smooth insulators.

With such achievement having a tongued ribbon, the escape line is sensibly increased under the same length of the termination or of the smooth insulator. The latter is not illustrated, its application being evident. Indeed the ribbon 3 is applied at the same manner both to the cable 2 end and to the smooth insulator. Such configuration characteristic of the ribbon in addition to the constitution characteristics of the same made of an elastomeric material proof to the eddy currents and weather proof, makes it possible also ouside the usage of medium voltage ribboned terminations and i.e. up to 36 KV phase-phase.

The tongued ribbon is equally profitable in the indoor applications, in that it allows to reduce the longitudinal overall dimensions while maintaining the required escape line in the various applications: this is particulary appreciated for the installation into cells or medium-voltage compartments, for which a trend to dimensions reduction is in progress.

Modifications are possible within the scope of the appended claims.

## Claims

1. Ribbon (3), applicable according to an helical configuration, for the insulation coating of terminations (1) for medium-voltage cables (2) consisting of a conductor coated by a primary insulator (6) bearing and concentrical to it a conductive screen (7) concentrically sheltered by a metal screen (9) and by an external sheath (8) or in the same way, for the coaling of smooth insulators, showing a transversal section having a tongue profile (4) protruding to the outside, characterized in that the ribbon (3) consists of two coupled parts, of which, the external one (15) on the tongue side is of a material performing the insulating function while the internal one (16) is of a material performing the function of sealing adhesive, in direct contact with a ribbon (14) wrapped up for the electric field control in proximity of the interruption of the conductive screen (7).

2. Ribbon (3) according to claim 1, characterized in that in the case said ribbon (14) is eliminated. the ribbon (3) consists of two coupled parts, of which the external one (15) on the tongue side is of a material carrying out an insulating function, while the internal one (16) is in direct contact with the cable end (2) and is of a material carrying out the electric field control in proximity of the interruption of the conductive screen (7).

3. Ribbon (3) according to the preceeding claims characterized in that it is produced with said helical configuration, performed so that its application on the cable (2) or smooth insulators end is made easy without its wrapping up being required.

## Patentansprüche

1. Band (3) mit einer schraubenlinienförmigen Ausbildung als Isolationsüberzug für Endverschlüsse (1) an Mittelspannungskabel (2) bestehend aus einem Leiter, der von einem Primärisolator (6) umgeben ist und konzentrisch einen leiffähigen Schirm (7) trägt, der konzentrisch von einem Metallschirm (9) und eine äußere Armierung (8) geschützt ist, oder zum Überziehen eines glatten isolators, wobei das Band im Querschnitt ein zungenförmiges Profil (4) aufweist, welches nach außen hin vorsteht, dadurch gekennzeichnet, daß das Band (3) aus zwei miteinander verbunden Teilen besteht, von denen der äußere Teil (15) auf der Zungenseite aus einem Material besteht, welches eine isolationsfunktion hat, während der innere Teil (16) aus einem Material besteht, das eine dichtende Klebefunktion hat und in direkter Berührung mit einem Band (14) steht, das zur elektrischen Feldsteuerung in der Nähe der Unterbrechung des leiffähigen Schirms (7) aufgewickelt ist.

2. Band (3) nach Anspruch 1, dadurch gekennzeichnet, daß beim Fehlen des Bandes (14) das Band (3) aus zwei miteinander verbundenen Teilen besteht, von denen der äußere Teil (15) auf der Zungenseite aus einem Material besteht, das eine isolierfunktion hat, während der innere Teil (16) in direkter Berührung mit dem Ende des Kabels (2) steht und aus einem Material besteht, das eine elektrische Feldsteuerung in der Nähe der Unterbrechung des leiffähigen Schirms (7) bewirkt.

3. Band (3) nach den vorhergehenden Ansprüchen, dadurch gekennzeichnet, daß es in schraubenförmiger Gestalt hergestellt ist, so daß seine Aufbringung auf dem Kabel (2) oder dem glatten isolatorende vereinfacht wird, ohne daß ein Umwickeln erforderlich wäre.

## Revendications

1. Ruban (3), applicable selon une configuration hélicoïdale, pour le revêtement isolant de terminaisons (1) de câbles (2) à moyenne tension, constitués d'un conducteur revêtu d'un isolateur principal (6) portant concentriquement à celui-ci un écran semi-conducteur (7) protégé concentriquement par un écran métallique (9) et par une gaine extérieure (8) ou de la même manière, pour le revêtement d'isolateurs lisses, présentant une section transversale ayant un profil de languettes (4) saillant vers l'extérieur, caractérisé en ce que le ruban (3) est constitué de deux éléments couplés, dont l'un, l'élément extérieur (15) sur le côté languette est en un matériau assurant la fonction d'isolement, tandis que l'élément intérieur (16) est en un matériau assurant la fonction d'adhésif d'étanchéité, en contact direct avec un ruban (14) enroulé pour le contrôle du champ électrique à proximité de l'interruption de l'écran semiconducteur (7).

2. Ruban (3) selon la revendication 1, caractérisé en ce que dans le cas où ledit ruban (14) est omis, le ruban (3) est constitué de deux éléments couplés, dont l'un, l'élément extérieur (15) sur le côté languette, est en un matériau assurant une fonction d'isolement, tandis que l'élément intérieur (16) se trouve en contact direct avec l'extrémité de câble (2) et est en un matériau assurant le contrôle du champ électrique à proximité de l'interruption de l'écran semiconducteur (7).

3. Ruban (3) selon les revendications précédentes, caractérisé en ce qu'il est produit avec ladite configuration hélicoïdale, réalisée de sorte que son application sur l'extrémité du câble (2) ou des isolateurs lisses est simplifiée sans que son enroulement soit nécessaire.
